# EUROPEAN PATENT SPECIFICATION

(11) **EP 3 461 281 B1**
(45) Date of publication and mention of the grant of the patent: **08.11.2023**
(21) Application number: 18819516.8
(22) Date of filing: 13.07.2018
(51) Int. Cl.: F16L 1/26, F16L 1/10, B63C 11/52, B63C 11/36

(54) **AN ARRANGEMENT AND A METHOD FOR JOINING PIPES ON WATER**
ANORDNUNG UND VERFAHREN ZUR VERBINDUNG VON ROHREN AUF WASSER
AGENCEMENT ET PROCÉDÉ D'ASSEMBLAGE DE TUYAUX SUR L'EAU

(30) Priority: 14.07.2017 FI 20175692
(43) Date of publication of application: 03.04.2019
(73) Proprietor: Dyke Engineering Oy, 00211 Helsinki (FI)
(72) Inventor: VALLI, Tuomas, 00200 Helsinki (FI)
(74) Representative: Heinonen & Co
(86) International application number: PCT/FI2018/050549
(87) International publication number: WO 2019/012186

(56) References cited:
- CN-A- 1 127 182
- CN-A- 102 133 692
- DE-B- 1 108 622
- DE-B- 1 108 622
- DE-C1- 19 610 526
- MX-A- 2009 007 908
- US-A- 2 667 751
- US-A- 2 667 751
- US-A- 3 407 612
- US-A- 3 744 258

## Description

### Technical field

Generally, the invention relates to an arrangement and a method for joining pipes on water, and more particularly, the present invention relates to an arrangement and a method for joining pipes on water without letting water to get into the pipes.

### Background technology

Joining pipes on or under water is known to be very difficult procedure. The prior art knows methods to assemble pipes at the bottom of a lake or a sea, wherein the end of the pipes are lifted to the deck of a ship in order to connect them together. The downside of this kind of method is that the pipes to be joined have to be bent into the correct position, so that they can be connected together. This causes stress and/or strain to the pipes and it requires heavy machines to execute the lifting. Executing a pipe joint in this way can be difficult and take a lot of time. In addition, the result may not be satisfactory, but the j oint and/or the pipes may be damaged.

In WO16038275 A1, it is presented an arrangement to provide a pipe joining on water, wherein the pipes are floating in a straight position on the water during the procedure. This solution provides easier mounting of the pipes, but unfortunately, it has drawbacks. In many cases it is required that water does not get into the pipes during the installation, so this solution cannot be used.

In order to provide clean pipe joining, i.e. prevent water from getting into the pipes, the end of pipes to be joined together has to be raised above the water surface, which leads again to the situation described above, wherein the pipes are in bent position and stress is directed to the j oint.

US3744258A presents a method of connecting the terminal portion of an elongate flexible underwater pipeline extending from a floating vessel means to a conduit portion of a fixed underwater installation, the method comprising: positioning the terminal portion of the underwater pipeline extending from the floating vessel means adjacent the terminal portion of the fixed underwater installation conduit portion, placing a work chamber into a body of water and lowering the submerged work chamber over the terminal portion of the fixed underwater installation conduit portion and the previously positioned adjacent terminal portion of the underwater pipeline.

DE1108622B presents a device for joining pipes in water comprising two opposite holes for pipes to be joined. The device comprises sealings, which are arranged both outside and inside of the vessel. Therefore, after the joint is made it is necessary to tread the vessel to the end of the pipe so that the tube travels through the holes. This can be difficult especially when the pipe is long and large in diameter.

US3407612A present a submergible bell-type apparatus for engaging underwater object. The working chamber comprises two shells, which lower one is arranged beneath an underwater pipeline and the upper one above it.

DE 19610526 presents a pipeline laying method having individual pipe sections positioned at the water surface, with welding of the ends of the adjacent sections carried out via a welding chamber at the water surface. The welding chamber is removed from the obtained joint and then moved along for welding the next pipe joint, until the required pipeline length is obtained, upon which the pipeline is sunk so that it lies on the waterbed.

### Summary of the invention

It is an objective of the present invention to implement such a solution, that the previously mentioned drawbacks of the prior art could be diminished. In particular, the invention is implied to solve how to execute a pipe joint on water in such way that water does not get into the pipes during joining procedure.

The objective of the invention is met by the features disclosed in the independent patent claims.

An arrangement for joining pipes on water according to the present invention is characterized by the features of claim 1.

In an embodiment, the altering means comprises one or more pumps for emptying said joining space from water, and in another embodiment the altering means comprises one or more valve for letting water come into said joining space. By using these embodiments and/or the combination thereof for altering the carrying capacity of the vessel, it may be easy to bring the vessel according to the present invention under the pipes to be joined, perform the pipe joining and remove the vessel after pipe joining. In an embodiment, the vessel is made of a material having a density less than the density of water for arranging said vessel to float. In another embodiment, the vessel further comprises floating means, such as one or more floats and/or pontoons, for arranging said vessel to float. Both of the above embodiments and the combination thereof may be used for ensuring that the vessel of the present invention does not sink into the water, but floats on the surface or near the of the surface of water, which can be useful for controlling the carrying capacity of the vessel, when arranging the vessel on the assembling site and/or when performing the pipe joining.

In an embodiment, the arrangement further comprises sealing parts arranged in connection with the openings and closing parts for preventing water from entering into the joining space. The sealing parts are preferably made of rubber, silicon or some other suitable, advantageously elastic material, which can tightly settle between the opening and the pipe, as well as the opening and closing part.

According to the invention, the vessel is formed in one piece. The advantage of this feature is to provide a vessel that does not need to be assembled in the water, but is ready to use. In another embodiment, at least a part of side walls of the vessel, between the openings, are formed in one piece. In a further embodiment, the side walls formed of one piece reach higher than the pipes when the pipes are in their place at the bottom of the openings.

A method for joining pipes on water according to the present invention is characterized by the features of claim 8.

According to an embodiment of the present invention, a method for joining pipes on water comprising an arrangement according to the present invention comprises at least following steps:
- arranging the end of pipes, which has been arranged to float, via the openings, into the joining space,
- arranging the closing parts in the opening upon the pipes,
- arranging the altering means to alter the carrying capacity by increasing the amount of air in the joining space,
- joining the end of the pipes together in the joining space.

In an embodiment, the method further comprises a step of arranging the altering means to alter the carrying capacity by increasing the amount of water in the joining space after pipe joining has been performed for removing the vessel from under the pipes.

Some preferable embodiments of the invention are described in the dependent claims.

Significant advantages can be achieved with the present invention when compared to prior art solutions. The present invention enables to perform pipe joining on water, when the pipes to be joined are arranged to float by using floats or pontoons, for example. This may enable to perform the pipe joining so that the pipes can be in straight position and lifting the pipes for performing the pipe joining may be avoided, which may prevent or at least reduce the stress and/or the strain in the pipes caused by pipe bending.

Thus, heavy machines for lifting pipes may not be needed for pipe joining, when using the present arrangement and the method, which may bring savings both in time and money, and it may simplify the joining process altogether. In this way, it may be easier and faster to perform a pipe joining, and the result may be also better than by using the previous methods.

Furthermore, the present invention may enable to perform pipe joining on water in such way, that water does not enter into the joining space and further to the pipes to be joined, which may enable to provide a pipe joining in such pipes that are required to keep clean also during the joining procedure.

It is useful to arrange the vessel of the present invention to float, because in that way it may be possible to prevent the vessel from sinking in any phase, which sinking could lead to very difficult lifting operation.

The arrangement according to the present invention is scalable and it may be suitable for joining all size of pipes. Furthermore, the arrangement according to the present invention may be possible to be utilized for various kinds of pipe joining methods, such as a flange joint and joining pipes by welding, for example.

It may be possible to arrange a pipe joint, which may be any kinds of pipe joints, into the joining space in the vessel in order to be connected to a pipe/pipes. This may help the pipe joining procedure and diminish a need to lift items, such as a pipe j oint, from one place to another during the pipe joining procedure on water.

The expression "a number of" refers herein to any positive integer starting from one (1), e.g. to one, two, or three.

The terms "a" and "an", as used herein, are defined as one or more than one.

### Short description of the drawings

Next, the invention is described in more detail with reference to the appended drawings, in which
Fig. 1 depicts a perspective view of the arrangement according to an embodiment of the present invention, and
Fig. 2 depicts a front view of an opening in the vessel according to an embodiment of the present invention,
Fig. 3 is a flow chart according to an embodiment of the present invention.

### Detailed description of the embodiments

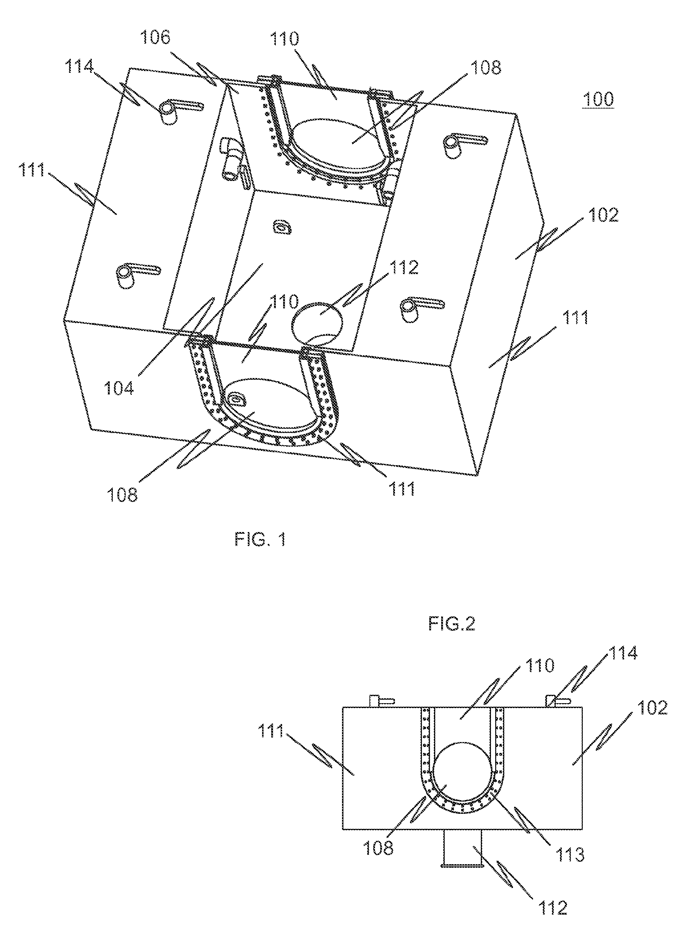

Fig. 1depicts a perspective view of the arrangement according to an embodiment of the present invention. The arrangement 100 for joining pipes on water comprises a vessel 102, which is arranged to float. The vessel 102 comprises a joining space 104 inside the vessel 102 having an open upper part 106 for executing pipe joining. Further, the vessel 102 comprises at least two opposed openings 108 for arranging the end of the pipes to be joined inside the joining space 104, and respective closing parts 110, which can be arrange in the openings in order to close the opening 108 when the pipe end is in the joining space 104. The arrangement according to the present invention further comprises altering means for altering a carrying capacity of said vessel by adjusting the ratio of water and air in said joining space.

In one embodiment, the vessel 102 is made of a material having a density less than the density of water for arranging said vessel to float. Preferably, the selected material is some light, but durable material, such as plastics like polyethylene.

In another embodiment, the vessel 102 further comprises floating means, such as one or more floats and/or pontoons (not shown), for arranging said vessel to float. Preferably, floating means, such as floats and/or pontoons are arranged symmetrically in connection with the vessel, and, thus, the number of the floats and/or pontoons is advantageously selected to be even. The floating means can be arranged in many ways to the vessel. In some embodiment, the floating means are arrange in connection with the vessel by attaching them to the vessel. In another embodiment, the vessel comprises one or more additional space 111 for the floating means. Preferably, the spaces for the floating means are also arranged symmetrically to the vessel 102.

The outside shape of the vessel can be selected in many ways, but it is preferably cuboid. In one embodiment, some part of the vessel, such as the bottom and/or one or more of the sides of the vessel, can be formed in a way that helps to tow the vessel by a watercraft in an assembling site. In another embodiment, the outside shape of the vessel is box-shaped. This embodiment can be used for vessels that are transported to an assembling site on the deck of a watercraft.

The size of the vessel varies depending on what size of the pipes to be joined the vessel is allocated for. In one embodiment, the arrangement further comprises adapter part (not shown), which can be arranged in the openings 108 in order to adapt the vessel for various sizes of pipes.

At least a part of side walls of the vessel 102, between the openings 108, are formed in one piece. In a further embodiment, the side walls formed of one piece reach higher than the pipes (above the top of the pipes) when the pipes are in their place at the bottom of the openings. "In one piece" means that there are no joints on the wall, which would necessitate assembling the wall when the vessel is on the water.

The joining space 104 is arranged inside of the vessel. The joining space is preferably made big enough for the pipes to be joined and at least one person to stand there in order to make the joining procedure easier. The size of the joining space can also be selected to be suitable for the used joining method, such as performing a flange joint or joining the tubes by welding, for example.

In one embodiment, the size of the joining space is selected so that some additional parts, such as a pipe joint, can be placed in the joining space in order to be connected to a pipe or pipes to be joined. In the present embodiment, the joining space can comprise fixing means for fixing the additional part into the right position in the joining space in order to make it easier to connect the part with the pipe/pipes.

Fig. 2 depicts a front view of an opening in the vessel according to an embodiment of the present invention. The joining space 104 comprises at least two opposed openings 108, which are arranged at the end of the vessel 102. The openings 108 are formed to be wide enough for pipes the vessel is allocated to join. In embodiment comprising adapter parts, the opening 108 are formed for the biggest pipes the vessel is allocated to join and the adapter parts are used for the smaller pipes.

As depicted in Fig 2, the form of the opening corresponds the form of the pipe at the bottom of the opening, and at the top the opening is open.

The arrangement further comprises closing parts 110 for closing the openings 108 after the end of the pipes has been directed into the joining space 104. In one embodiment, the edge of the opening comprises a groove or a rail for setting the closing part to its place, and in another embodiment, the groove or the rail is provided in the edge of the closing part.

The form of the closing part corresponds the form of the pipe at the bottom of the closing part, so that when set in its place in the opening, there is a pipe shaped opening at the both ends the vessel. In an embodiment, the arrangement further comprises means, such as a bolt or a latch, for locking the closing parts in its place.

In one embodiment, a sealing part 113 is arranged between the edge of the opening and the edge of the closing part and/or between the pipe and at the edge of the opening and/or the edge of the closing part, so that water preventing water to come into the joining space.

Furthermore, the arrangement further comprises altering means for altering a carrying capacity of the vessel by adjusting the ratio of water and air in said joining space.

In an embodiment, the altering means comprises one or more pumps for emptying the joining space from water. The pump/pumps can be arranged in the vessel, e.g. in the additional space 111, for example. In another embodiment, the pumps are placed somewhere outside the vessel, on a watercraft, for example.

In one embodiment, a bilge tube 112, as depicted in Fig. 1, is arranged at the bottom of the joining space for emptying the joining space from water.

In one embodiment, the altering means comprises one or more valve 114 for letting water come into said joining space. Preferably, the valve/valves 114 are also arranged in connection with the joining space. In another embodiment, the means for emptying the joining space are used in a reverse order to letting water in

In an embodiment, the altering means, such as a valve and/or a pump, are arranged in the additional space 111 in the vessel.

In one embodiment, the arrangement comprises controlling means for controlling the emptying means and/or the filling means, remote control vessel and/or computer controlled means.

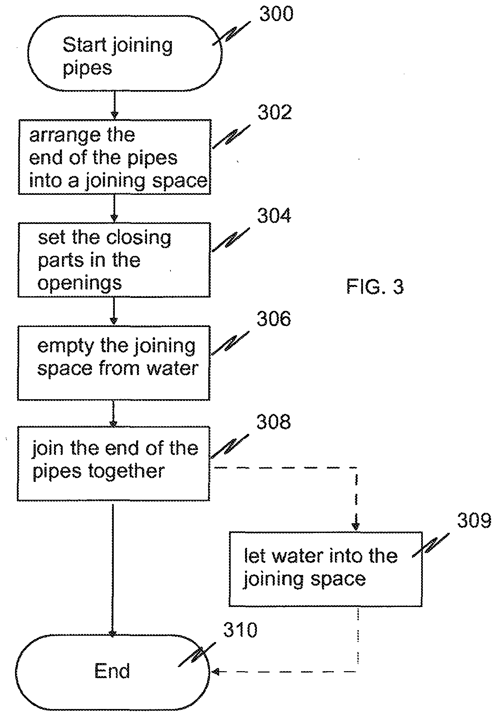

Fig. 3 is a flow chart according to an embodiment of the present invention. A method for joining pipes on water comprises at least following steps.

At step 300, joining of the pipes is started. In this step, the pipes has been arranged to float in water and the vessel is arranged in the assembly site near to the pipe to be joined. The carrying capacity of the vessel can be altered by letting water into the joining space in this step for helping the vessel in a right position near the end of the pipes.

At step 302, the end of both pipes are arranged via the openings into the joining space. As the carrying capacity of the vessel has been altered, the vessel can be guided under the pipes and turned into the right position. The end of the pipes can also be arranged inside the joining space.

At step 304, the closing parts are set in the openings upon the pipes. In the embodiment comprising the locking means, the closing parts are locked in its position.

Further, at step 306, the altering means are arranged to alter the carrying capacity of the vessel by increasing the amount of air in the joining space. In the embodiment comprising a pump, the water is pumped from the joining space in order to arrange the vessel to float higher on the water, which prevents water from entering into the joining space.

Further, at step 308, the end of the pipes are joined together in the joining space. Various kinds of pipe joining methods can be used, such as a flange joint and joining pipes by welding, for example.

In an embodiment, at step 309, the altering means are arranged to alter the carrying capacity of the vessel by increasing the amount of water in the joining space. In the embodiment comprising a valve, the water is let into the joining space, which helps removing of the vessel from under the pipes.

At step 310, the vessel is removed under the pipes after the joining has been performed.

## Claims

1. An arrangement (100) for joining pipes on water comprising:
- a vessel (102) arranged to float comprising
∘ a joining space (104) inside said vessel (102) having an open upper part (106) for performing pipe joining,
∘ at least two opposed openings (108) for arranging the pipes to be joined inside said joining space (104), wherein the form of the openings (108) corresponds to the form of the pipe at the bottom of each opening (108), and at the top, each opening (108) is open and
∘ respective and independent from each other closing parts (110) arrangeable in said openings (108) upon said pipe in order to close said openings (108) when the pipe to be joined is in said joining space (104),
wherein said vessel (102) is formed in one piece and said arrangement further comprises altering means for altering a carrying capacity of said vessel (102) by adjusting the ratio of water and air in said joining space (104).

2. An arrangement according to claim 1, wherein said altering means comprises one or more pumps for emptying said joining space from water.

3. An arrangement according to any preceding claim, wherein said altering means comprises one or more valve (114) for letting water come into said joining space (104).

4. An arrangement according to any preceding claim, wherein said vessel (102) is made of a material having a density less than the density of water for arranging said vessel (102) to float.

5. An arrangement according to any preceding claim, wherein said vessel (102) further comprises floating means, such as one or more floats and/or pontoons, for arranging said vessel to float.

6. An arrangement according to any preceding claim, wherein said arrangement further comprises sealing parts (113) arranged in connection with said openings (108) and closing parts (110) for preventing water from entering into said joining space (104).

7. An arrangement according to any preceding claim, wherein side walls of the vessel (102) and between the openings (108) are formed in one piece and reach higher than the pipes when the pipes are located at the bottom of the openings (108).

8. A method for joining pipes on water comprising an arrangement according to any of claim 1-7, comprising at least following steps:
- arranging the end of pipes, which has been arranged to float, via said openings, into said joining space (302),
- arranging said closing parts in said opening upon the pipes (304),
- arranging the altering means to alter the carrying capacity by increasing the amount of air in the joining space (306),
- joining the end of the pipes together in said joining space (308).

9. A method according to claim 8 further comprising a step of arranging the altering means to alter the carrying capacity by increasing the amount of water in the joining space after pipe joining has been performed for removing said vessel from under the pipes (309).

## Patentansprüche

1. Anordnung (100) zur Verbindung von Rohren auf Wasser umfassend:
- ein schwimmend angeordnetes Gefäß (102) mit
o einem Verbindungsraum (104) im Inneren des Gefäßes (102), das einen offenen oberen Teil (106) zur Durchführung der Rohrverbindung aufweist,
o mindestens zwei gegenüberliegenden Öffnungen (108) zum Anordnen der zu verbindenden Rohre im Inneren des Verbindungsraums (104), wobei die Form der Öffnungen (108) der Form des Rohrs am Boden jeder Öffnung (108) entspricht und jede Öffnung (108) am oberen Ende offen ist und
o jeweiligen und voneinander unabhängigen Verschlussteilen (110), die in den Öffnungen (108) am Rohr angeordnet werden können, um die Öffnungen (108) zu verschließen, wenn das Rohr, das verbunden werden soll, sich im Verbindungsraum (104) befindet,
wobei das Gefäß (102) in einem Stück geformt ist und die Anordnung ferner eine Änderungseinrichtung zum Ändern der Tragfähigkeit des Gefäßes (102) durch Einregeln des Verhältnisses von Wasser und Luft im Verbindungsraum (104) umfasst.

2. Anordnung nach Anspruch 1, wobei die Veränderungseinrichtung eine oder mehrere Pumpen zum Entleeren des Verbindungsraums von Wasser umfasst.

3. Anordnung nach einem vorhergehenden Anspruch, wobei die Änderungseinrichtung ein oder mehrere Ventile (114) umfasst, um Wasser in den Verbindungsraum (104) eintreten zu lassen.

4. Anordnung nach einem vorhergehenden Anspruch, wobei das Gefäß (102) ferner aus einem Material mit einer geringeren Dichte als die Dichte von Wasser hergestellt ist, um das Gefäß (102) schwimmend anzuordnen.

5. Anordnung nach einem vorhergehenden Anspruch, wobei das Gefäß (102) ferner schwimmende Mittel wie zum Beispiel einen oder mehrere Schwimmer und/oder Pontons umfasst, um das Gefäß schwimmend anzuordnen.

6. Anordnung nach einem vorhergehenden Anspruch, wobei die Anordnung ferner Dichtungsteile (113) umfasst, die in Verbindung mit den Öffnungen (108) und Verschlussteilen (110) angeordnet sind, um zu verhindern, dass Wasser in den Verbindungsraum (104) eintritt.

7. Anordnung nach einem vorhergehenden Anspruch, wobei Seitenwände des Gefäßes (102) und zwischen den Öffnungen (108) in einem Stück ausgebildet sind und höher als die Rohre reichen, wenn die Rohre am Boden der Öffnungen (108) sind.

8. Verfahren zum Verbinden von Rohren auf Wasser umfassend eine Anordnung nach einem der Ansprüche 1 - 7, das mindestens folgende Schritte umfasst:
- Anordnen des Endes der Rohre, das so angeordnet ist, dass es über Öffnungen in den Verbindungsraum (302) schwimmt,
- Anordnen der Verschlussteile in den Öffnungen auf den Rohren (304),
- Anordnen der Veränderungseinrichtung, um die Tragfähigkeit durch Erhöhen der Luftmenge im Verbindungsraum (306) zu verändern,
- Verbinden der Enden der Rohre im Verbindungsraum (308) .

9. Verfahren nach Anspruch 8, das ferner einen Schritt umfasst, mit dem die Veränderungseinrichtung so angeordnet wird, dass sie die Tragfähigkeit abändert, indem sie die Wassermenge im Verbindungsraum erhöht, nachdem die Rohrverbindung ausgeführt worden ist, um das Gefäß unter den Rohren (309) zu entfernen.

## Revendications

1. Agencement (100) d'assemblage de tuyaux sur l'eau comprenant :
- une cuve (102) agencée pour flotter comprenant
o un espace d'assemblage (104) à l'intérieur de ladite cuve (102) ayant une partie supérieure ouverte (106) pour effectuer l'assemblage de tuyaux,
o au moins deux ouvertures opposées (108) pour agencer les tuyaux à assembler à l'intérieur dudit espace d'assemblage (104), dans lequel la forme des ouvertures (108) correspond à la forme du tuyau au fond de chaque ouverture (108), et au-dessus, chaque ouverture (108) est ouverte et
o des parties de fermeture (110) respectives et indépendantes l'une de l'autre pouvant être agencées dans lesdites ouvertures (108) sur ledit tuyau afin de fermer lesdites ouvertures (108) lorsque le tuyau à assembler est dans ledit espace d'assemblage (104),
dans lequel ladite cuve (102) est formée en une pièce et ledit agencement comprend en outre un moyen de modification pour modifier une capacité de transport de ladite cuve (102) en ajustant le rapport d'eau et d'air dans ledit espace d'assemblage (104).

2. Agencement selon la revendication 1, dans lequel ledit moyen de modification comprend une ou plusieurs pompe(s) pour vider ledit espace d'assemblage de l'eau.

3. Agencement selon l'une quelconque revendication précédente, dans lequel ledit moyen d'assemblage comprend une ou plusieurs soupape(s) (114) pour faire entrer l'eau dans ledit espace d'assemblage (104).

4. Agencement selon l'une quelconque revendication précédente, dans lequel ladite cuve (102) est faite d'un matériau ayant une densité inférieure à la densité de l'eau pour mettre ladite cuve (102) à flotter.

5. Agencement selon l'une quelconque revendication précédente, dans lequel ladite cuve (102) comprend en outre un moyen de flottaison, tels qu'un ou plusieurs flotteur(s) et/ou ponton(s), pour mettre ladite cuve à flotter.

6. Agencement selon l'une quelconque revendication précédente, dans lequel ledit agencement comprend en outre des parties d'étanchéité (113) agencées en connexion avec lesdites ouvertures (108) et parties de fermeture (110) pour empêcher l'eau d'entrer dans ledit espace d'assemblage (104).

7. Agencement selon l'une quelconque revendication précédente, dans lequel des parois latérales de la cuve (102) et entre les ouvertures (108) sont formées d'une seule pièce et vont plus haut que les tuyaux lorsque les tuyaux sont situés au bas des ouvertures (108).

8. Procédé d'assemblage de tuyaux sur l'eau comprenant un agencement selon l'une quelconque des revendications 1
- 7, comprenant au moins les étapes suivantes :
- agencer les extrémités de tuyaux, qui ont été mises à flotter, par le biais desdites ouvertures, jusque dans ledit espace d'assemblage (302),
- agencer lesdites parties de fermeture dans ladite ouverture sur les tuyaux (304),
- agencer le moyen de modification pour modifier la capacité de transport en augmentant la quantité d'air dans l'espace d'assemblage (306),
- assembler l'extrémité des tuyaux ensemble dans ledit espace d'assemblage (308).

9. Procédé selon la revendication 8, comprenant en outre une étape d'agencer le moyen de modification pour modifier la capacité de transport en augmentant la quantité d'eau dans l'espace d'assemblage après que l'assemblage des tuyaux a été effectué pour retirer ladite cuve de dessous les tuyaux (309).
